# EUROPEAN PATENT SPECIFICATION

(11) **EP 2 233 718 B1**
(45) Date of publication and mention of the grant of the patent: **09.04.2014**
(21) Application number: 08859176.3
(22) Date of filing: 12.11.2008
(51) Int. Cl.: F02B 37/24, F01D 17/16, F02B 39/00

(54) **TURBOCHARGER**
TURBOLADER
TURBOCOMPRESSEUR

(30) Priority: 12.12.2007 JP 2007320719
(43) Date of publication of application: 29.09.2010
(73) Proprietor: IHI Corporation, Tokyo 135-8710 (JP)
(72) Inventor: MATSUYAMA, Yoshimitsu, Tokyo 135-8710 (JP); TANGE, Hiroshi, Tokyo 135-8710 (JP)
(74) Representative: Köhler, Walter
(86) International application number: PCT/JP2008/003282
(87) International publication number: WO 2009/075057

(56) References cited:
- EP-A2- 1 816 317
- JP-A- 8 177 509
- JP-A- 60 175 707
- JP-A- 2004 278 532
- JP-A- 2007 205 311
- JP-T- 2006 527 323
- JP-U- 63 061 545
- US-A1- 2007 172 347

## Description

### Technical Field

The present invention relates to a turbocharger which is simple in structure and which can reduce turbulence of fluid in a turbine impeller outlet to improve efficiency of a turbine.

### Background Art

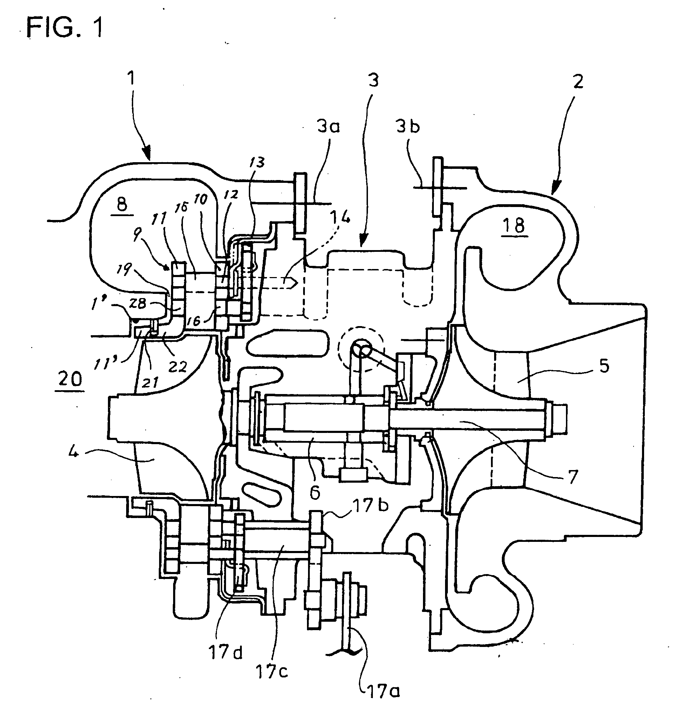

Fig. 1 shows a conventional variable displacement turbocharger to which the invention is applied. In the turbocharger, turbine and compressor housings 1 and 2 are integrally assembled through a bearing housing 3 by fastening bolts 3a and 3b, a turbine impeller 4 in the turbine housing 1 being connected to a compressor impeller 5 in the compressor housing 2 by a turbine shaft 7 rotatably supported via a bearing 6 in the bearing housing 3.

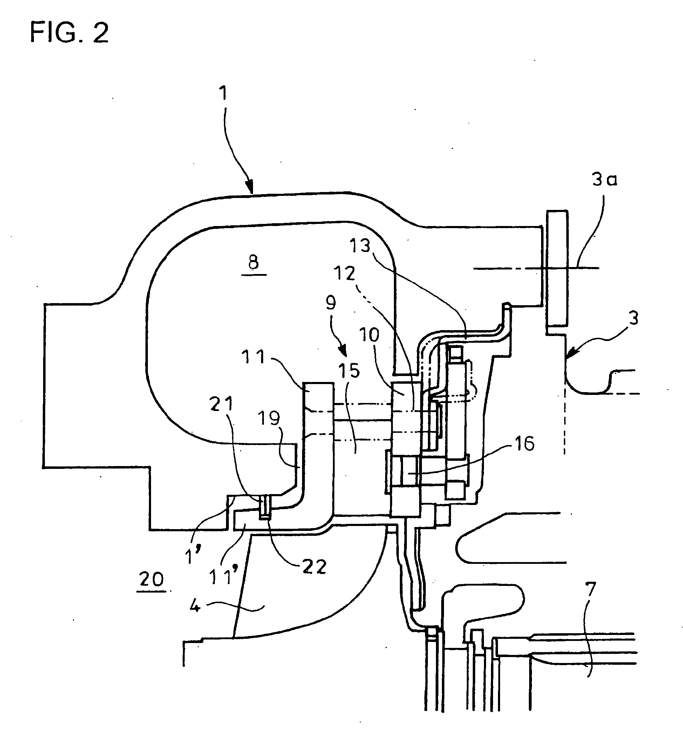

As shown in Fig. 2 in enlarged scale, the bearing housing 3 is provided, on its turbine housing 1 side, with an exhaust nozzle 9 by which fluid (exhaust gas) introduced into a scroll passage 8 in the turbine housing 1 is guided to a turbine impeller 4.

The exhaust nozzle 9 comprises front and rear exhaust introduction walls 10 and 11 respectively on sides of the bearing and turbine housings 3 and 1 and integrally assembled together with a required distance between them by, for example, three fixing members 12 arranged circumferentially. Upon assembling of the turbine and bearing housings 1 and 3, an attachment member 13 fixed on a front surface of the front wall 10 (side surface of the bearing housing 3) is clamped by the housings 1 and 3 to fix the exhaust nozzle 9. Upon the assembling, the exhaust nozzle 9 is positioned with respect to the bearing housing 3 by a positioning pin 14.

Arranged between the front and rear walls 10 and 11 are a plurality of nozzle vanes 15 each rotatably supported at least on the front wall 10 by a vane shaft 16 extending through the front wall 10. In the example shown in Fig. 2, each of the nozzle vanes 15 is supported in a cantilever manner by the vane shaft 16 arranged on the vane 15 on the side of the bearing housing 3 to extend through the front wall 10. Alternatively, as shown in Fig. 1, each of the nozzle vanes 15 may be dually supported by vane shafts 16 and 28 on opposite sides of the vane 15 extending through the front and rear walls 10 and 11, respectively.

In Fig. 1, reference numerals 17a, 17b, 17c and 17d designate a linked transmission mechanism for varying an opening angle of the nozzle vanes 15 for capacity control; and 18, a scroll passage in the compressor housing 2.

Provided between the turbine housing 1 and the rear wall 11 of the exhaust nozzle 9 is a gap 19 which is, by nature, is unwanted and which is however is provided for countermeasure to, for example, possible thermal deformation of the turbine housing 1 between during being hot and during being cold and possible variations in accuracy of parts to be assembled.

The gap 19 may disadvantageously cause the exhaust gas in the scroll passage 8 to vainly leak to a turbine impeller outlet 20, resulting in lowering of turbine efficiency. Thus, in order to block the gap 19, it has been proposed to arrange sealing piston rings 21 between an outer surface of a downstream extension 11' of the rear wall 11 and an inner surface 1' of the turbine housing 1 confronting the extension 11' so as to prevent the gas leakage and absorb thermal deformation (see Patent Literature 1).

In JP 2006-125588A, as best shown in Fig. 2, formed on the outer periphery of the extension 11' of the rear wall 11 is an annular groove 22 into which generally two sealing piston rings 21 are inserted with their closed gaps being not aligned or overlapped with each other, thereby providing a sealing device. The piston rings 21 are pressed at their outer peripheries against the inner surface 1' of the turbine housing 1 by spring force of the piston rings themselves to prevent the gas leakage.

JP 2004 278532 A, US 2007/0172347 A1 and JP 60 175707 A disclose turbochargers wherein pressing means such as disc springs or coil spring are arranged between each of the vane shafts and a housing. EP 1 816 317 discloses a turbocharger wherein each of the nozzle vanes is dually supported by vane shafts on opposite sides of the vane extending through the front and rear walls, respectively. JP 2006 527323 T discloses a turbocharger wherein each of said nozzle vanes is dually supported by vane shafts on opposite sides of the vane, one of the vane shafts extending through the front wall, the other vane shaft being embedded in the rear wall. JP 8 177509 A discloses a turbocharger wherein the clearance between the turbine housing and a free end part of the nozzle vanes is held constant.

### Summary of Invention

### Technical Problems

In the conventional turbochargers, as shown in Fig. 2, some sealing device has been devised to prevent gas leakage from the gap 19; however, even with such devised sealing device, it is difficult and limitative to substantially improve turbine efficiency.

Thus, the inventors have made various researches and experiments on factors other than the gas leakage affecting the turbine efficiency to find out that the more the exhaust gas in the turbine impeller outlet 20 is turbulent, the more the turbine efficiency is lowered and that the less the exhaust gas in the turbine impeller outlet 20 is turbulent, the more the turbine efficiency is improved.

The invention was made in view of the above and has its object to provide a turbocharger which is simple in structure and which can reduce turbulence of fluid in a turbine impeller outlet to improve turbine efficiency.

### Solution to Problems

The invention is directed to a turbocharger according to claim 1 with a turbine housing having a scroll passage outwardly of an exhaust nozzle which in turn is arranged outwardly of a turbine impeller rotatably supported on a bearing housing, said exhaust nozzle having a plurality of nozzle vanes between front and rear exhaust introduction walls on sides of the bearing and turbine housings, respectively, a vane shaft for each of said nozzle vanes extending at least through the front wall and being rotatably supported, comprising pressing means arranged between the respective vane shafts and the bearing housing for urging the respective vane shafts toward the rear wall to displace the nozzle vanes toward the rear wall.

In the turbocharger of the present invention, said pressing means is a disc spring between the vane shafts and the bearing housing.

In a turbocharger of the prior art, said pressing means may be a coiled spring between each of the vane shafts and the bearing housing.

In the turbocharger, each of said nozzle vanes may be supported in a cantilever manner by the vane shaft on one side of the vane extending through the front wall.

In the turbocharger, each of said nozzle vane may be dually supported by vane shafts on opposite sides of the vane extending through the front and rear walls, respectively.

In the turbocharger, each of said nozzle vane may be dually supported by vane shafts on opposite sides of the vane, one of the vane shafts extending through the front wall, the other of the vane shafts being embedded in the rear wall.

### Advantageous Effects of Invention

According to a turbocharger of the invention which comprises pressing means between the bearing housing and the respective vane shafts of the nozzle vanes for urging the respective vane shafts toward the rear wall to displace the nozzle vanes toward the rear wall, a clearance between the nozzle vanes and the rear wall can be minimized by the simple structure, resulting in advantageous effect that turbulence of the fluid in the turbine impeller outlet can be reduced to substantially improve efficiency of the turbine.

### Brief Description of Drawings

Fig. 1 is a sectional side view showing a conventional turbocharger;
Fig. 2 is a sectional side view showing the nozzle and its vicinity in Fig. 1;
Fig. 3 is a sectional side view showing a nozzle and its vicinity according to an embodiment of the invention;
Fig. 4 is a side view showing the disc spring in Fig. 3;
Fig. 5 is a sectional side view showing a nozzle and its vicinity according to a further explanatory embodiment not according to the invention;
Fig. 6 is a sectional side view showing a further embodiment of the vane shafts which support the nozzle vane;
Fig. 7 is a sectional side view showing a still further embodiment of the vane shafts which support the nozzle vane;
Fig. 8 is a diagram for showing conditioning conventional and claimed turbochargers to have substantially same pressure ratios between upstream and downstream sides of turbine impeller;
Fig. 9 is a diagram showing velocity distribution of exhaust gas in radial positions in comparison of the conventional turbocharger with the claimed turbocharger; and
Fig. 10 is a diagram showing turbine efficiency in comparison of the conventional turbocharger with the claimed turbocharger.

### Reference Signs List

- 1: turbine housing
- 3: bearing housing
- 4: turbine impeller
- 5: compressor impeller
- 8: scroll passage
- 9: exhaust nozzle
- 10: front exhaust introduction wall
- 11: rear exhaust introduction wall
- 15: nozzle vane
- 16: vane shaft
- 20: turbine impeller outlet
- 23: pressing means
- 24: disc spring
- 27: coiled spring
- 28: vane shaft
- 28': vane shaft

### Description of Embodiments

Embodiments of the invention will be described in conjunction with the attached drawings.

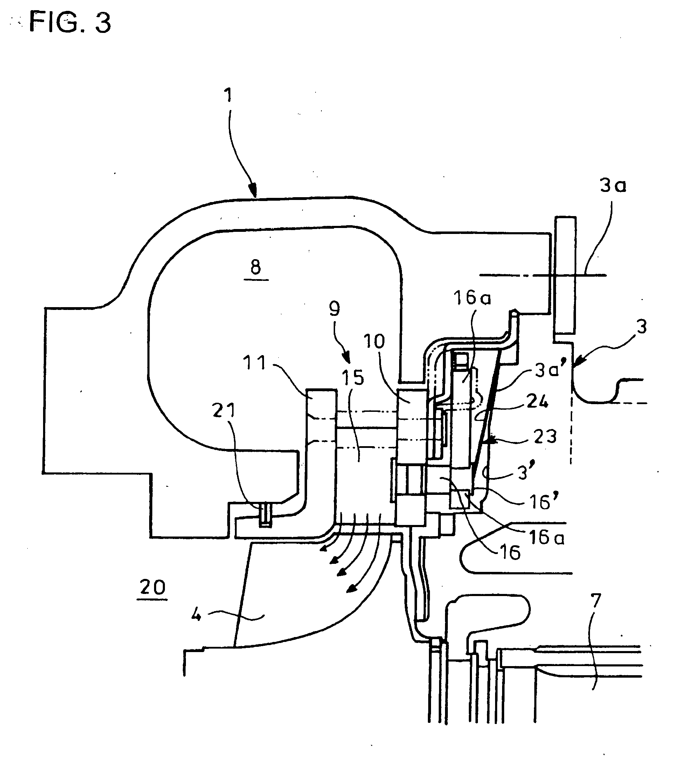

Fig. 3 shows an embodiment of the invention applied to the turbocharger shown in Fig. 2 with nozzle vanes 15 being arranged between front and rear exhaust introduction walls 10 and 11 of an exhaust nozzle 9 and each being supported in a cantilever manner by a vane shaft 16 arranged on a side of the vane 15 and extending through the front wall 10, comprising pressing means 23 arranged between a front end 16' (right end in Fig. 3) of the vane shaft 16 of each of the nozzle vanes 15 and a rear surface 3' of a bearing housing 3 (between a nozzle link plate 16a referred to hereinafter and the rear surface 3') to urge the respective vane shafts 16 toward the rear wall 11 to thereby keep the respective nozzle vanes 15 always in a displaced state toward the rear wall 11.

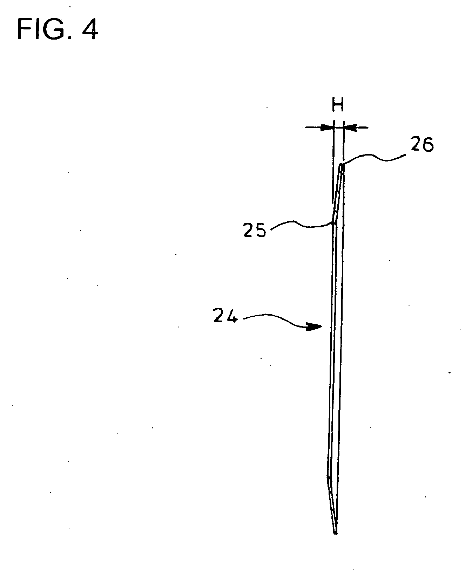

The pressing means 23 shown in Fig. 3 is in the form of a disc spring 24 which urges the respective vane shafts 16 toward the rear wall 11. As shown in Fig. 4, the disc spring 24 is frustoconical and has inner and outer peripheral edges 25 and 26 mutually offset with respect to an axis of the spring to thereby provide a doughnut shape, an axial height H of the disc spring 24 with the frustoconical shape being set to be greater than a distance between the respective front ends 16' of the respective vane shafts 16 and the rear surface 3' of the bearing housing 3.

The respective front ends 16' of the vane shafts 16 extend through and are retained by inner ends of nozzle link plates 16a (shaft support members) arranged between the front wall 10 and the rear surface 3' of the bearing housing 3. The respective nozzle link plates 16a are pivoted about the vane shafts 16 by rotating a drive ring (not shown); the respective vane shafts 16 (nozzle vanes 15) are rotated integrally with the respective nozzle link plates 16a through the pivotal movements of the nozzle link plates 16a. Since the disc spring 24 is arranged in a compressed state between the front ends 16' of the respective vane shafts 16 and the rear surface 3' of the bearing housing 3, the elastic force of the disc spring 24 causes the vane shafts 16 to be urged toward the rear wall 11, the nozzle vanes 15 being displaced toward the rear wall 11.

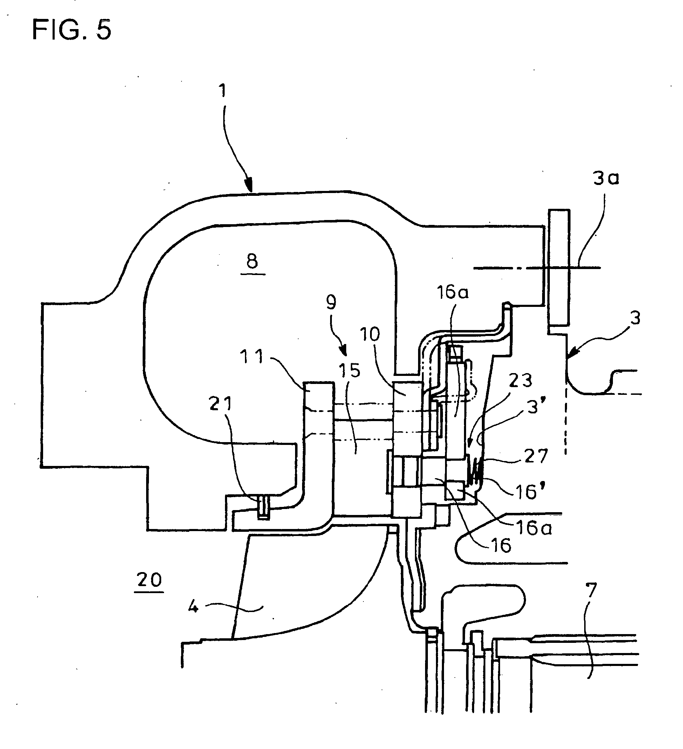

Fig. 5 shows a further explanatory embodiment of pressing means 23 not according to the invention which has a coiled spring 27 between respective front ends 16' of vane shafts 16 and a rear surface 3' of a bearing housing 3 so as to urge the respective vane shafts 16 toward a rear exhaust introduction wall 11.

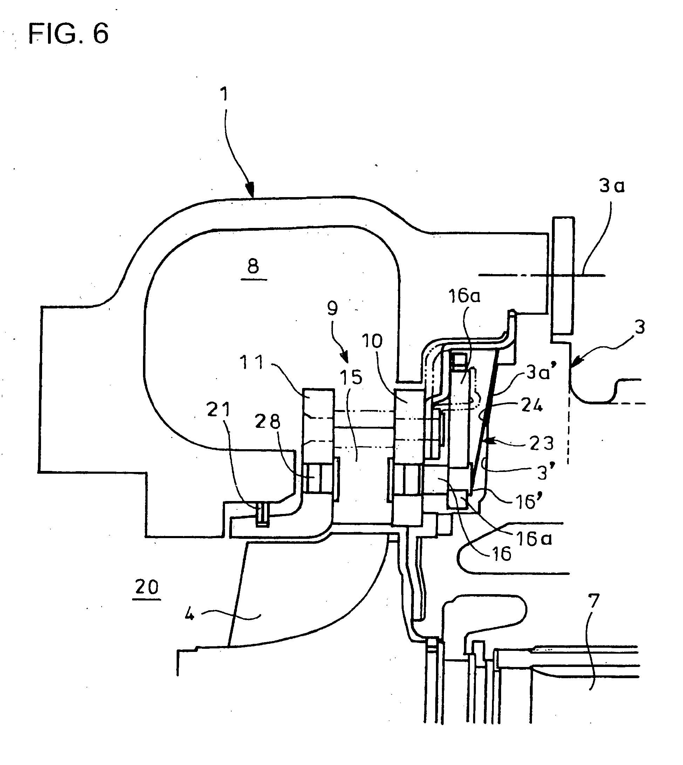

Fig. 6 shows a case where vane shafts 16 and 28 on opposite sides of each of nozzle vanes 15 extend through front and rear exhaust introduction walls 10 and 11, respectively, so that the nozzle vanes 15 are dually supported by the vane shafts 16 and 28 on the walls 10 and 11; also in this case, pressing means 23 comprising a disc spring 24 may be arranged between the front ends 16' of the vane shafts 16 and a rear surface 3' of a bearing housing 3 so as to urge the respective vane shafts 16 toward the rear wall 11.

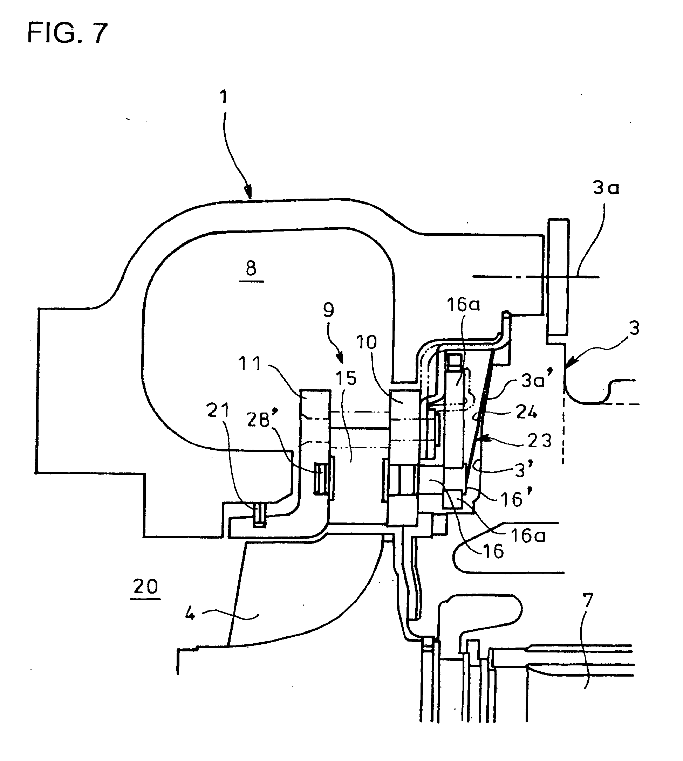

Fig. 7 shows a case where vane shafts 16 and 28' are provided on opposite sides of each of nozzle vanes 15, one 16 of the vane shafts extending through a front exhaust wall 10, the other vane shaft 28' not extending through but being embedded in a rear exhaust introduction wall 11 so that the nozzle vanes 15 are dually supported by the vane shafts 16 and 28'; also in this case, pressing means 23 comprising a disc spring 24 may be arranged between front ends 16' of the vane shafts 16 and a rear surface 3' of a bearing housing 3 so as to urge the respective vane shafts 16 toward the rear wall 11.

Mode of operation of the embodiments shown in Figs. 3-7 is as follows.

When the pressing means 23 comprising the disc spring 24 according to the invention shown in Figs. 3 and 4 or the coiled springs 27 not according to the invention shown in Fig. 5 is arranged between the front ends 16' of the vane shafts 16 of the nozzle vanes 15 and the rear surface 3' of the bearing housing 3, the respective vane shafts 16 are always urged by the pressing means 23 toward the rear wall 11, so that the respective nozzle vanes 15 are retained in their displaced positions toward the rear wall 11.

More specifically, there exist inherently clearances between the nozzle vanes 15 and the front and rear exhaust introduction walls 10 and 11 so as to make the nozzle vanes 15 pivotable and rotatable; and the clearances may be different between individual turbochargers. Then, as mentioned in the above, the respective vane shafts 16 are urged by the pressing means 23 toward the rear wall 11, so that the respective nozzle vanes 15 are displaced toward the rear wall 11 by the clearance. As a result, the respective nozzle vanes 15 contact the rear wall 11 with the clearance between the nozzle vanes 15 and the rear wall 11 being minimized.

In the embodiments shown in Figs. 3, 6 and 7, the rear surface 3' of the bearing housing 3 has a circumference in the form of frustoconical surface 3a' (forwardly and outwardly tapered surface). The disc spring 24 is arranged with its outer circumference being between the frustoconical surface 3a' and the nozzle link plates 16a and extending along the frustoconical surface 3a'. This makes it easy to ensure a space for the disc spring 24 without broadening the distance between the rear surface 3' and the nozzle link plates 16a.

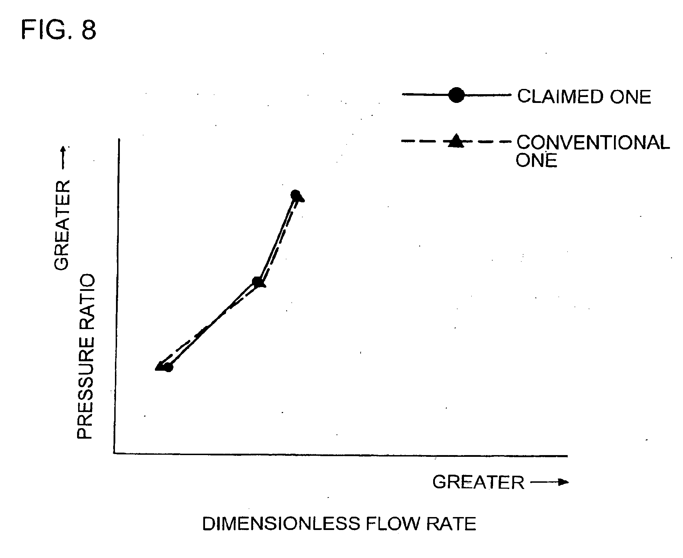

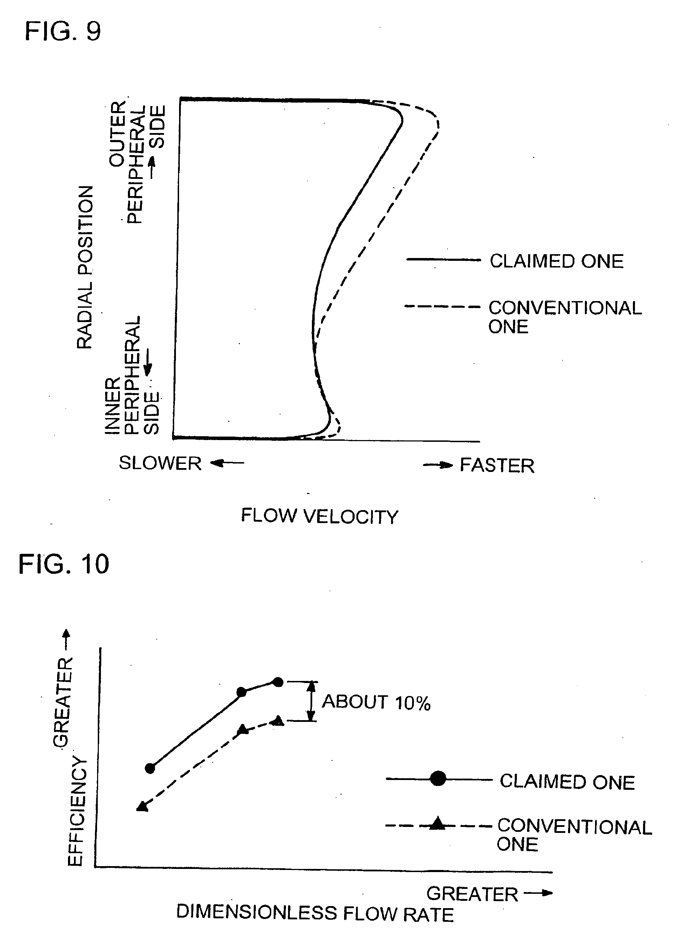

On the conditioning that a conventional turbocharger (conventional one) and a turbocharger of the invention (claimed one) are made to have substantially same pressure ratios between upstream and downstream sides of turbine impeller 4 as shown in Fig. 8, the inventors determined velocity distribution of exhaust gas at radial positions in turbine impeller outlet 20 through numerical analysis. The results are shown in Fig. 9.

As is clear from Fig. 9, in comparison with the conventional one, the claimed one has radially flattened flow velocity distribution with less deviation. This means that the claimed one has less turbulence of exhaust gas in turbine impeller outlet 20 in comparison with the conventional one.

Moreover, turbine efficiency was compared between the claimed and conventional ones through numerical analysis. As a result, it was found out as shown in Fig. 10 that the claimed one has turbine efficiency improved by about 10% relative to the conventional one.

The exhaust gas in the scroll passage 8 passes through the nozzle vanes 15 of the exhaust nozzle 9 into the turbine impeller 4. Because of such exhaust gas flow being a complex three-dimensional stream, it is much difficult to find out factors in turbulence of the exhaust gas in the turbine impeller outlet 20.

However, as mentioned in the above, when the clearance between the respective nozzle vanes 15 and the rear wall 11 is minimized by urging the respective vane shafts 16 toward the rear wall 11, then the velocity distribution of the exhaust gas at radial positions in the turbine impeller outlet 20 becomes flattened to reduce the turbulence of the exhaust gas in the turbine impeller outlet 20, whereby the turbine efficiency can be improved. Thus, it was found out that the clearance between the respective nozzle vanes 15 and the rear wall 11 is one of factors affecting turbulence of the exhaust gas in the turbine impeller outlet 20.

Thus, according to the invention, by the above-mentioned simple structure that the pressing means 23 is arranged between the bearing housing 3 and the respective vane shafts 16 of the nozzle vanes 15, the nozzle vanes 15 are displaced toward the rear wall 11 to keep in the minimized state the clearance between the respective nozzle vanes 15 and the rear wall 11, whereby the turbulence of the fluid in the turbine impeller outlet 20 can be reduced to substantially improve the efficiency of the turbine.

It is to be understood that the invention is not limited to the above embodiments and that various changes and modifications may be made without departing from the scope of the invention. For example, though the sealing device in the form of the piston rings 21 for the gap 19 has been exemplified in the above embodiments, there is no restriction or limitation on construction of the sealing device.

### Industrial Applicability

A turbocharger according to the invention can be applied to displace nozzle vanes toward a rear exhaust introduction wall to minimize clearance between the respective nozzle vanes and the rear wall, thereby reducing turbulence of fluid in a turbine impeller outlet to improve efficiency of a turbine.

## Claims

1. A turbocharger with a turbine housing (1) having a scroll passage (8) outwardly of an exhaust nozzle (9) which in turn is arranged outwardly of a turbine impeller (4) rotatably supported on a bearing housing (3), said exhaust nozzle (9) having a plurality of nozzle vanes (15) between front and rear exhaust introduction walls (10,11) on sides of the bearing and turbine housings (3,1), respectively, a vane shaft (16) for each of said nozzle vanes (15) extending at least through the front wall (10) and being rotatably supported, comprising pressing means (23) arranged between the respective vane shafts (16) and the bearing housing (3) for urging the respective vane shafts (16) toward the rear wall (11) to displace the nozzle vanes (15) toward the rear wall (11), **characterized in that** the said pressing means (23) is a disc spring (24) between the vane shafts (16) and the bearing housing (3).

2. A turbocharger as claimed in claim 1, wherein a rear surface (3') of the bearing housing has a frustoconical surface (3a') extending along the disc spring (24).

3. A turbocharger as claimed in claim 1 or 2, wherein each of said nozzle vanes (15) is supported in a cantilever manner by the vane shaft (16) on one side of the vane (15) extending through the front wall (10).

4. A turbocharger as claimed in claim 1 or 2, wherein each of said nozzle vanes (15) is dually supported by vane shafts (16,28) on opposite sides of the vane (15) extending through the front and rear walls (10,11), respectively.

5. A turbocharger as claimed in claim 1 or 2, wherein each of said nozzle vanes (15) is dually supported by vane shafts (16,28') on opposite sides of the vane (15), one (16) of the vane shafts (16,28') extending through the front wall (10), the other vane shaft (28') being embedded in the rear wall (11).

## Patentansprüche

1. Ein Turbolader mit einem Turbinengehäuse (1), das einen Spiraldurchlass (8) aus einer Ausstoßdüse (9) besitzt, die ihrerseits außerhalb eines Turbinenrades (4) angeordnet ist, das an einem Lagergehäuse (3) drehbar unterstützt ist, wobei die Ausstoßdüse (9) eine Mehrzahl von Düsenschaufeln (15) zwischen vorderen und hinteren Ausstoßeinleitungswänden (10, 11) auf Seiten des Lager- bzw. Turbinengehäuses (3, 1) besitzt, wobei sich eine Schaufelwelle (16) für jede der Düsenschaufeln (15) wenigstens durch die Vorderwand (10) erstreckt und drehbar unterstützt ist, und mit Pressmitteln (23), die zwischen den jeweiligen Schaufelwellen (16) und dem Lagergehäuse angeordnet sind, um die jeweiligen Schaufelwellen (16) gegen die Rückwand (11) zu drängen, um die Düsenschaufeln (15) zu der Rückwand (11) zu verlagern, **dadurch gekennzeichnet, dass** die Pressmittel (23) eine Scheibenfeder (24) zwischen den Schaufelwellen (16) und dem Lagergehäuse (3) sind.

2. Ein Turbolader nach Anspruch 1, wobei eine hintere Oberfläche (3') des Lagergehäuses eine kegelstumpfförmige Oberfläche (3a') besitzt, die sich längs der Scheibenfeder (24) erstreckt.

3. Ein Turbolader nach Anspruch 1 oder 2, wobei jede der Düsenschaufeln (15) durch die Schaufelwelle (16), die sich durch die Vorderwand (10) erstreckt, auf einer Seite der Schaufel (15) in auskragender Weise unterstützt ist.

4. Ein Turbolader nach Anspruch 1 oder 2, wobei jede der Düsenschaufeln (15) durch Schaufelwellen (16, 28), die sich durch die vordere bzw. die hintere Wand (10, 11) erstrecken, auf gegenüberliegenden Seiten der Schaufeln (15) doppelt unterstützt ist.

5. Ein Turbolader nach Anspruch 1 oder 2, wobei jede der Düsenschaufeln (15) durch Schaufelwellen (16, 28') auf gegenüberliegenden Seiten der Schaufel (15) doppelt unterstützt ist, wobei sich eine (16) der Schaufelwellen (16, 28') durch die Vorderwand (10) erstreckt und die andere Schaufelwelle (28') in die hintere Wand (11) eingebettet ist.

## Revendications

1. Turbocompresseur avec un corps de turbine (1) ayant une volute de passage (8) à l'extérieur d'une tuyère d'échappement (9) qui à son tour est disposée à l'extérieur d'une turbine (4) supportée en rotation par un corps de palier (3), ladite tuyère d'échappement (9) ayant une pluralité d'aubes de tuyère (15) entre des parois d'introduction avant et arrière d'échappement (10, 11) sur les côtés des corps de palier et de turbine (3, 1), respectivement, un arbre d'aube (16) pour chacune desdites aubes de tuyère (15) s'étendant au moins à travers la paroi avant (10) et étant supporté en rotation, comprenant un moyen de pression (23) disposé entre les arbres d'aubes respectifs (16) et le corps de palier (3) pour solliciter les arbres d'aubes respectifs (16) en direction de la paroi arrière (11) pour déplacer les aubes de tuyère (15) en direction de la paroi arrière (11), **caractérisé en ce que** ledit moyen de pression (23) est une rondelle ressort (24) entre les arbres d'aubes (16) et le corps de palier (3).

2. Turbocompresseur selon la revendication 1, dans lequel une surface arrière (3') du corps de palier a une surface tronconique (3a') s'étendant le long de la rondelle ressort (24).

3. Turbocompresseur selon la revendication 1 ou 2, dans lequel chacune desdites aubes de tuyère (15) est supportée d'une manière en porte-à-faux par l'arbre d'aube (16) d'un côté de l'aube (15) s'étendant à travers la paroi avant (10).

4. Turbocompresseur selon la revendication 1 ou 2, dans lequel chacune desdites aubes de tuyère (15) est supportée de façon double par des arbres d'aubes (16, 28) sur des côtés opposés de l'aube (15) s'étendant à travers les parois avant et arrière (10, 11), respectivement.

5. Turbocompresseur selon la revendication 1 ou 2, dans lequel chacune desdites aubes de tuyère (15) est supportée de façon double par des arbres d'aubes (16, 28') sur des côtés opposés de l'aube (15), l'un (16) des arbres d'aubes (16, 28') s'étendant à travers la paroi avant (10), l'autre arbre d'aube (28') étant encastré dans la paroi arrière (11).
